**Europäisches Patentamt**

**European Patent Office**

**Office européen des brevets**

(11) Numéro de publication : **0 347 287 B1**

# (12) FASCICULE DE BREVET EUROPEEN

(45) Date de publication du fascicule du brevet :
**30.09.92 Bulletin 92/40**

(51) Int. Cl.$^5$ : **F16H 7/12**

(21) Numéro de dépôt : **89401584.1**

(22) Date de dépôt : **08.06.89**

(54) **Tendeur pour courroie de transmission de puissance.**

(30) Priorité : **14.06.88 FR 8807897**

(43) Date de publication de la demande :
**20.12.89 Bulletin 89/51**

(45) Mention de la délivrance du brevet :
**30.09.92 Bulletin 92/40**

(84) Etats contractants désignés :
**BE DE ES GB IT LU NL SE**

(56) Documents cités :
**EP-A- 0 243 237**
**FR-A- 1 260 067**
**FR-A- 2 451 511**

(73) Titulaire : **HUTCHINSON**
**2 rue Balzac**
**F-75008 Paris (FR)**

(72) Inventeur : **Cartaud, Maurice**
**28, rue des Pillots**
**F-18100 Vierzon (FR)**
Inventeur : **Blut, Guy**
**2, rue Félix Piat**
**F-18100 Vierzon (FR)**

(74) Mandataire : **Brycman, Jean et al**
**CABINET ORES 6, Avenue de Messine**
**F-75008 Paris (FR)**

## Description

L'invention a pour objet un tendeur pour courroie de transmission de puissance.

La Demanderesse a déjà proposé, dans FR-A-2 597 565 ou EP-243 237 un dispositif de tendeur pour courroie de transmission de puissance comprenant au moins un ressort de rappel avec une première partie de ressort et une seconde partie de ressort, ledit ressort de rappel étant associé à l'axe d'un galet tendeur lequel coopère avec une courroie pour commander le déplacement dudit galet sous l'action dudit ressort et deux chambres à volumes variables limitées chacune par une gaine en élastomère, remplies d'un liquide et communiquant entre elles à l'une de leurs extrémités par un dispositif à clapet dont la traversée par le liquide pour rentrer dans et/ou sortir desdites chambres introduit un effet d'amortissement des vibrations susceptibles de prendre naissance dans la courroie, la gaine et ladite première partie de ressort associées à l'une des chambres étant solidaires entre elles, par enrobage de ladite première partie de ressort dans ladite gaine.

Un tel dispositif qui permet, d'une part, d'assurer la tension de la courroie, -condition sine qua non d'un fonctionnement satisfaisant du système de transmission de puissance-, permet en outre d'amortir les vibrations engendrées dans la courroie, notamment celles dues aux irrégularités cycliques du système moteur ou aux à-coups liés à la mise en route et/ou à l'arrêt des appareillages solidaires des arbres menés qu'entraîne la courroie. Les résultats obtenus à l'aide d'un tel tendeur sont satisfaisants, mais le dispositif à clapet introduit une dissymétrie de fonctionnement qui est à l'origine d'une très forte différence entre les pressions dynamiques maximum du liquide à l'entrée et à la sortie de ladite chambre. Ainsi, dans le cas d'un tendeur à deux chambres limitées par la gaine d'élastomère et pour une courroie de transmission entraînant une pluralité d'arbres menés à partir du vilebrequin d'un moteur d'automobile, de camion, ou analogue, le rapport des pressions dynamiques maximum est au minimum de l'ordre de 10, si ce n'est davantage, la pression la plus forte pouvant être de l'ordre de 40 bars, par exemple. Il en résulte des impératifs sévères de construction pour le dispositif qui doit résister à de telles pressions, tant en ce qui concerne l'élastomère que le ressort mis en oeuvre.

Compte tenu de cet état de fait, c'est un but de l'invention de fournir un tendeur pour courroie de transmission de puissance qui, tout en fournissant les mêmes résultats que ceux du dispositif connu, soit néanmoins plus simple à réaliser.

C'est, aussi, un but de l'invention de fournir un tel tendeur qui, en outre, présente des caractéristiques améliorées par rapport au dispositif connu, tant en ce qui concerne sa tenue en endurance et sa résistance que sa possibilité de fonctionnement sur une large gamme de température.

C'est, encore, un but de l'invention de fournir un tel tendeur qui, tout en étant de plus courte longueur que le dispositif connu, présente cependant les mêmes caractéristiques, procurant ainsi un avantage considérable pour sa mise en oeuvre dans tous les domaines d'application où l'espace est limité, par exemple dans l'industrie automobile où les cotes d'encombrement des accessoires sous le capot moteur doivent être aussi faibles que possible.

Un tendeur pour courroie de transmission de puissance du type défini ci-dessus est caractérisé, selon l'invention, en ce que la gaine et ladite seconde partie de ressort associées à l'autre chambre sont indépendantes l'une de l'autre, ladite seconde partie de ressort entourant la gaine et travaillant en extension.

Dans une forme de réalisation, la première partie de ressort et la seconde partie de ressort sont ménagées par deux zones distinctes d'un seul et même ressort à boudin dont les extrémités sont fixées à deux obturateurs desdites chambres.

Dans une autre forme de réalisation, la première partie de ressort et la seconde partie de ressort sont ménagées par deux ressorts à boudin distincts.

Dans une telle réalisation, le ressort indépendant de la gaine et travaillant en extension est avantageusement un ressort à spires jointives précontraint dans sa position de repos.

De façon avantageuse, la gaine associée à ladite seconde partie de ressort est montée avec jeu à l'intérieur de ladite seconde partie de ressort.

D'autre caractéristiques et avantages de l'invention apparaîtront de la description qui suit, faite à titre d'exemple, et en référence au dessin annexé, dans lequel :

– la figure 1 est une vue très schématique d'un système de transmission de puissance par courroie ;

– la figure 2 est un vue schématique d'un tendeur selon l'invention.

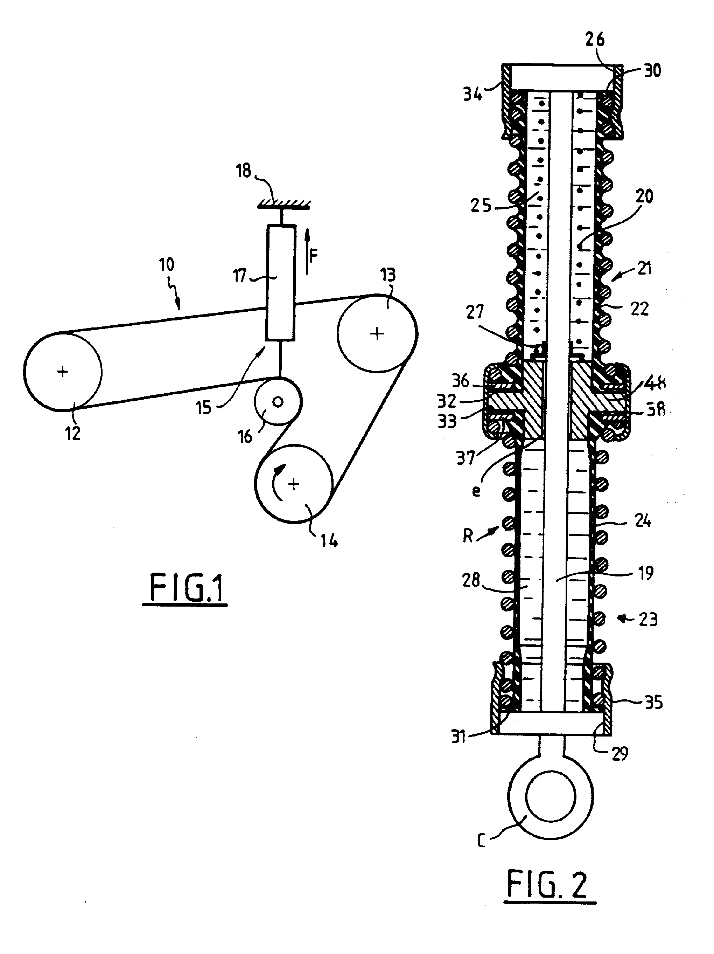

On se réfère d'abord à la figure 1 qui illustre, très schématiquement, un système de transmission de puissance dans lequel une courroie 10 coopère avec les flasques de poulies 12 et 13 solidaires en rotation d'arbres menés et avec les flasques d'une poulie 14 solidaire d'un arbre menant, par exemple le vilebrequin d'un moteur d'automobile, de camion, de machine agricole ou analogue. Pour assurer la tension de la courroie 10 on associe au système un tendeur 15 à galet 16 et amortisseur à ressort 17 accroché en un point 18 du moteur, le galet 16 étant monté mobile sensiblement suivant la direction de la flèche F qui est celle de l'axe du ressort. Le dispositif tendeur à amortisseur est destiné à rattraper l'allongement de la courroie 10 afin d'éviter le glissement de celle-ci par rapport aux flasques des poulies, d'une part et, d'autre part, à éviter que le ressort de l'amortisseur n'entre en résonance ainsi qu'à amortir les vibrations engendrées dans la courroie 10 par les irrégularités cycliques du régime moteur, en particulier au ralenti ou lors des à-coups engendrés par la mise en route et/ou l'arrêt des appareillages entraînés par les arbres solidaires des poulies 12 et 13.

Conformément à l'invention, le tendeur 15, figure 2, comprend un ressort à boudin R dont une première partie 21 est solidaire d'une gaine en matériau élastomère 22, par exemple du caoutchouc nitrile par enrobage de cette partie de ressort dans l'élastomère et dont une seconde partie 23 entoure une gaine 24 en élastomère mais sans en être solidaire. La gaine 22, cylindrique, étanche, limite une première chambre 25 remplie de liquide, fermée à l'une de ses extrémités par un obturateur 26 dont est solidaire une tige 19, tandis que l'autre extrémité est fermée par un dispositif à clapet 27 sur lequel s'exerce l'action d'un ressort 20 pour fermer un espace annulaire e ménagé dans une bague 48 Le dispositif à clapet 27 est prévu pour la commande de la circulation, -avantageusement dissymétrique-du liquide entre la chambre 25 et une seconde chambre 28 communiquant à l'une des extrémités avec l'espace e et dont, l'autre extrémité est fermée par un obturateur 29 dont est solidaire la tige 19 et un crochet ou anneau, C, de liaison directe ou indirecte au galet 16.

Pour la fixation des gaines 22 et 24 sur les obturateurs 26 et 29 d'une part et sur la bague médiane 48 d'autre part, l'invention prévoit de les conformer à leurs extrémités, suivant des collerettes comme 30, 31, 32 et 33, les deux premières étant serrées entre les obturateurs 26 et 29 et les spires d'extrémité du ressort sur lequel s'accrochent des manchons de blocage 34 et 35, respectivement, tandis que les collerettes 32 et 33 sont appliquées sur des épaulements de la bague 48 par les spires d'extrémité de la première et de la deuxième parties de ressort, sur lesquelles est serti un manchon 38 avec interposition de rondelles métalliques 36 et 37, respectivement.

La première et la seconde partie du ressort peuvent être ménagées par deux zones distinctes d'un seul et même ressort. En variante, les parties 21 et 23 sont ménagées par deux ressorts à boudin distincts. Dans un tel cas, le ressort 23 qui travaille à l'extendion peut être réalisé sous forme d'un ressort à spires jointives précontraint dans sa condition de repos, une telle précontrainte permettant de réduire la dimension hors-tout du tendeur tout en garantissant une tension satisfaisante de la courroie 10.

En outre, la possibilité de déformation du ressort 23 indépendamment de la gaine 24 a pour résultat que ladite gaine se déforme sur toute sa longueur, lors de l'augmentation de volume de la chambre 28, de sorte que le taux de travail de la paroi de la gaine est fortement réduit, par un facteur au moins égal à deux par rapport à celui du dispositif connu, augmentant ainsi la résistance et la tenue en endurance du dispositif selon l'invention.

Celui-ci est, complémentairement, d'un fonctionnement extrèmement fiable, étant donné que la possibilité du déplacement relatif du ressort 23 et de la gaine 24, c'est-à-dire l'absence d'adhérence entre l'élastomère et le métal dans la zone travaillant en extension, n'introduit pas de sollicitation en traction entre l'élastomère et le métal, c'est-à-dire élimine les risques de rupture et, partant, un possible défaut d'étanchéité.

Aux avantages qui viennent d'être indiqués du tendeur pour courroie selon l'invention, s'ajoute encore le fait que le montage avec possibilité de déplacement de la gaine 24 à l'intérieur du ressort 23 autorise, si ledit montage est effectué avec une jeu suffisant, une déformation par dilatation de la gaine, lors d'un accroissement de température particulièrement sensible sur le volume de liquide que forment les chambres 25 et 28.

Une telle mesure est avantageusement mise en oeuvre, avec un tendeur pour courroie de transmission de puissance appliquée à un moteur d'automobile pour que le jeu entre le ressort 23 et la gaine 24, à température ambiante, soit exactement compensé par la dilatation du liquide entre la température ambiante et la température de fonctionnement, sans provoquer de déformation sensible du profil de l'élastomère constitutif de la gaine 22.

## Revendications

1. Tendeur pour courroie de transmission de puissance comprenant au moins un ressort de rappel (17, R) avec une première partie de ressort (21) et une seconde partie de ressort (23), ledit ressort de rappel étant associé à l'axe d'un galet tendeur (16) lequel coopère avec une courroie (10) pour commander le déplacement dudit galet sous l'action dudit ressort et deux chambres (25, 28) à volumes variables limitées chacune par une gaine (22, 24) en élastomère, remplies d'un liquide et communiquant entre elles à l'une de leurs extrémités par un dispositif à clapet (27) dont la traversée par le liquide pour rentrer dans et/ou sortir desdites chambres introduit un effet d'amortissement des vibrations susceptibles de prendre naissance dans la courroie, la gaine (22) et ladite première partie de ressort (21) associées à l'une des chambres (25) étant solidaires entre elles, par enrobage de ladite première partie de ressort (21) dans ladite gaine (22), caractérisé en ce que la gaine (24) et ladite seconde partie de ressort (23) associées à l'autre chambre (28) sont indépendantes l'une de l'autre, ladite seconde partie de ressort (23) entourant la gaine (24) et travaillant en extension.

2. Tendeur selon la Revendication 1, caractérisé en ce que la première partie de ressort (21) et la seconde partie de ressort (23) sont ménagées par deux zones distinctes d'un même ressort à boudin (R) dont les extrémités sont fixées à deux obturateurs (26, 29) desdites chambres (25, 28).

3. Tendeur selon la Revendication 1, caractérisé en ce que la première partie de ressort (21) et la seconde partie de ressort (23) sont ménagées par deux ressorts à boudin distincts.

4. Tendeur selon la Revendication 3, caractérisé en ce que le ressort (23) indépendant de la gaine (24) et travaillant en extension est avantageusement un ressort à spires jointives précontraint dans sa condition de repos.

5. Tendeur selon la Revendication 1, caractérisé en ce que la gaine (24) associée à ladite seconde partie de ressort (23) est montée avec jeu à l'intérieur de ladite seconde partie de ressort.

## Claims

1

Tensioner for power transmission belt comprising at least one return spring (**17,R**) with a first spring portion (**21**) and a second spring portion (**23**), said return spring being associated with the shaft of a tensioning roller (**16**) which cooperates with a belt (**10**) to control the movement of said roller under the action of said spring, and two variable-volume chambers (**25,28**) each bounded by an elastomer sheath (**22,24**), filled with a liquid and communicating with each other at one of their ends by a valve device (**27**) in which the circulation of the liquid to enter and/or leave said chambers introduces a damping effect on the vibrations liable to be generated in the belt, the sheath (**22**) and said first spring portion (**21**) associated with one of the chambers (**25**) being made fast together, by encasing said first spring portion (**21**) in said sheath (**22**), characterized in that the sheath (**24**) and said second spring portion (**23**) associated with the other chamber (**28**) are independent of each other, said second spring portion (**23**) surrounding the sheath (**24**) and working in tension.

2

Tensioner as claimed in Claim 1, characterized in that the first spring portion (**21**) and the second spring portion (**23**) are made by two distinct zones of the same helical spring (**R**) of which the ends are fixed to two closure members (**26,29**) of said chambers (**25,28**).

3

Tensioner as claimed in Claim 1, characterized in that the first spring portion (**21**) and the second spring portion (**23**) are made by two distinct helical springs.

4

Tensioner as claimed in Claim 3, characterized in that the spring (**23**) independent of the sheath (**24**) and working in tension is advantageously a contiguous-coil spring prestressed in its rest condition.

5

Tensioner as claimed in Claim 1, characterized in that the sheath (**24**) associated with said second spring portion (**23**) is mounted with a clearance inside said second spring portion.

## Patentansprüche

1. Treibriemenspanner für eine Kraftübertragung, mit mindestens einer Rückstellfeder (17, R) mit einem ersten Federteil (21) und einem zweiten Federteil (23), wobei die genannte Rückstellfeder der Achse einer Spannrolle (16) zugeordnet ist, welche mit einem Riemen (10) zusammenwirkt, um die Versetzung der genannten Rolle unter der wirkung der genannten Feder zu steuern, und zwei Kammern (25, 28) mit variablen Volumina, die jeweils durch eine Hülse aus Elastomermaterial umgrenzt sind, mit einer Flüssigkeit gefüllt sind und miteinander an ihren Enden durch eine Ventilvorrichtung (27) in Verbindung stehen, wobei diese, wenn sie von der Flüssigkeit durchströmt wird, damit diese in die Kammern eintritt und/oder aus diesen heraustritt, eine Wirkung der Dämpfung von Schwingungen erbringt, die imstande sind, im Riemen zu entstehen, wobei die Hülse (22) und der genannte erste Teil der Feder (21), die der einen der Kammern (25) zugeordnet sind, untereinander durch Einhüllen des genannten ersten Teils der Feder (21) in der genannten Hülse (22) fest verbunden sind, dadurch **gekennzeichnet**, daß die Hülse (24) und der genannte zweite Teil der Feder (23), die der anderen Kammer (28) zugeordnet sind, voneinander unabhängig sind, wobei der zweite Teil der Feder (23) die Hülse (24) umgibt und auf Längung arbeitet.

2. Spanner nach Anspruch 1, dadurch **gekennzeichnet,** daß der erste Teil der Feder (21) und der zweite Teil der Feder (23) von zwei getrennten Bereichen ein und derselben Schraubenfeder (R) gebildet sind, deren Enden an zwei Verschlüssen (26, 29) der genannten Kammern (25, 28) befestigt sind.

3. Spanner nach Anspruch 1, dadurch **gekennzeichnet**, daß der erste Teil der Feder (21) und der zweite Teil der Feder (23) von zwei getrennten Schraubenfedern gebildet sind.

4. Spanner nach Anspruch 3, dadurch **gekennzeichnet**, daß die von der Hülse (24) unabhängige und auf Längung arbeitende Feder (23) vorteilhafterweise eine Feder mit aneinander anstoßenden Windungen ist, die in ihrem Ruhezustand vorgespannt ist.

5. Spanner nach Anspruch 1, dadurch **gekennzeichnet**, daß die Hülse (24), die dem genannten zweiten Federteil (23) zugeordnet ist, mit Spiel im inneren des genannten zweiten Federteils angebracht ist.

FIG.1

FIG. 2